# EUROPÄISCHE PATENTSCHRIFT

(11) **EP 2 615 008 B1**
(45) Veröffentlichungstag und Bekanntmachung des Hinweises auf die Patenterteilung: **23.09.2015**
(21) Anmeldenummer: 13000136.5
(22) Anmeldetag: 11.01.2013
(51) Int. Cl.: B62B 3/14, B62B 5/06

(54) **Von Hand bewegbarer, mit gleichen Wagen stapelbarer Transportwagen**
Manually moveable transport trolley, which can be stacked with the same trolley
Chariot de transport pouvant être déplacé à la main, empilable sur les mêmes chariots

(30) Priorität: 14.01.2012 DE 202012000348 U
(43) Veröffentlichungstag der Anmeldung: 17.07.2013
(73) Patentinhaber: Eberlein, Martin, 89358 Kammeltal (DE)
(72) Erfinder: Eberlein, Martin, 89358 Kammeltal (DE)

(56) Entgegenhaltungen:
- DE-A1- 3 840 280
- DE-A1- 19 806 644
- DE-U1- 29 700 857
- DE-U1-202010 013 748

## Beschreibung

Die Erfindung betrifft einen von Hand bewegbaren Transportwagen, der in einen gleichen Transportwagen platzsparend einschiebbar ist, um mit mehreren Transportwagen einen Stapel zu bilden, aus dem der Transportwagen für die Benutzung entnommen werden kann, mit einem am Transportwagen befestigten Griffpaar, das zum Schieben und Ziehen des Transportwagens bestimmt ist, wobei jeder Griff des Griffpaares einen Befestigungsabschnitt zum Befestigen des Griffes am Transportwagen sowie einen Griffabschnitt zum Führen des Transportwagens aufweist, wobei ferner jeder Befestigungsabschnitt schräg nach unten und zum Transportwagen hinführend und jeder Griffabschnitt, ebenfalls schräg nach unten, jedoch vom Transportwagen wegführend angeordnet ist und wobei sich am Transportwagen Mittel befinden, die in einem Abstand zu den Griffen angeordnet sind und im Stapel mehrerer Transportwagen den jeweiligen Stapelabstand zwischen den Transportwagen bestimmen.

Transportwagen dieser Art sind hinreichend bekannt. Sie werden bevorzugt in SB-Märkten und in Heimwerkermärkten eingesetzt. Diese Wagen werden den Kunden zusammen geschoben und in Reihen gestapelt zur Benutzung zur Verfügung gestellt.

In Selbstbedienungsmärkten der englischen Marktkette Tesco findet man Transportwagen, die mit Griffen der eingangs genannten Art ausgestattet sind.

Zum Stand der Technik zählt auch ein in der DE 198 06 644 A1 beschriebener stapelbarer Einkaufswagen, bei dessen Griffen der Befestigungsabschnitt und der Griffabschnitt ebenfalls schräg angeordnet sind.

Bei den genannten Transportwagen ist die Gestaltung der Griffe Ursache für einen relativ großen Stapelabstand zwischen den einzelnen in einer Reihe befindlichen Transportwagen. In gestapelter Formation sind die Griffe dieser Transportwagen hintereinander angeordnet. Deshalb sind Transportwagen entwickelt worden, bei denen die Griffe in gestapelter Formation der Wagen geneigt und sich teilweise überlappend, wie aus der DE 38 40 280 A1 ersichtlich, angeordnet sind. Dadurch lässt sich der Stapelabstand zwischen den einzelnen Transportwagen verringern.

Es ist Aufgabe der Erfindung, bei einem Transportwagen der hier vorliegenden Art das Griffpaar, und damit die beiden Griffe, so zu gestalten, dass der Stapelabstand zwischen den einzelnen Transportwagen, im Gegensatz zum aktuellen Stand der Technik, noch weiter verringert werden kann.

Die Lösung der Aufgabe findet sich im kennzeichnenden Teil des Anspruches 1. Weitere vorteilhafte Lösungsansätze werden in den Unteransprüchen vorgeschlagen.

Im Gegensatz zum Stand der Technik besteht der entscheidende Vorteil der aufgefundenen Lösung darin, dass die Griffabschnitte der Griffe seitenversetzt oder winklig zu den Befestigungsabschnitten der Griffe eines vorausbefindlichen Transportwagens so platziert sind, dass von der Seite betrachtet bei einem Stapel ineinander geschobener Transportwagen eine Überschneidung von Befestigungsabschnitten und Griffabschnitten oder umgekehrt erreicht wird mit der Folge, dass die Transportwagen aufgrund der nunmehr so geschachtelten Anordnung der Griffpaare noch enger als bisher gestapelt werden können. Der Stapelabstand von Transportwagen zu Transportwagen lässt sich durch diese Maßnahme sogar so weit verringern, dass in engst gestapeltem Zustand von Transportwagen, beispielsweise bei deren Versand, die Fahrrollen der Transportwagen fast aneinander stoßen. Dies führt zu einer entscheidenden Reduzierung der Versandkosten, da auf der gleichen Stellfläche eines Transportmittels mehr Transportwagen Platz finden als dies bisher möglich war.

Die Erfindung wird anhand von Ausführungsbeispielen näher erläutert. Es zeigt
- Fig. 1: einen Transportwagen, schematisch gezeichnet in einer Draufsicht;
- Fig. 2: einen der beiden Griffe eines Griffpaares;
- Fig. 3: ebenfalls in einer Draufsicht zwei platzsparend ineinander geschobene Transportwagen;
- Fig. 4: in Draufsicht ein weiteres Ausführungsbeispiel sowie
- Fig. 5: einen Stapel mit drei Transportwagen in Seitenansicht gezeichnet.

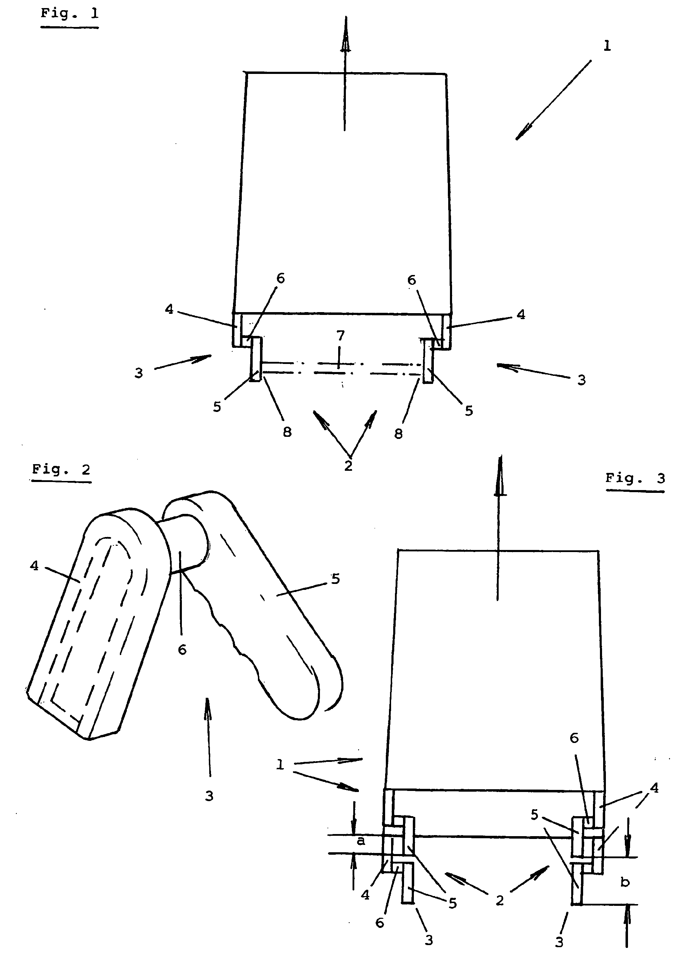

Der in Fig. 1 schematisch und in Draufsicht dargestellte Transportwagen 1 steht stellvertretend für alle denkbaren und bekannten Transportwagen 1, die in SB-Geschäften, Baumärkten oder Gartencentern den Kunden zur Verfügung gestellt werden. Der Transportwagen 1 ist in bekannter Weise so gestaltet, dass dieser in ebenfalls bekannter Weise mit gleichen Transportwagen 1 platzsparend ineinander geschoben, also gestapelt werden kann. Es sind deshalb am Transportwagen 1 bekannte Mittel, etwa in Form von Anschlägen vorgesehen, die in einem Abstand zu den Griffen 3 angeordnet und dazu bestimmt sind, den Stapelabstand zwischen den in einem Stapel 10 befindlichen Transportwagen 1 zu bestimmen. Der Transportwagen 1 weist in bekannter Weise ein Fahrgestell und gewöhnlich wenigstens eine Ladeplattform, wahlweise auch einen oder mehrere Körbe auf und ist mit einem aus zwei Griffen 3 bestehenden Griffpaar 2 ausgestattet, das zum Schieben und Ziehen des Transportwagens 1 bestimmt ist. Unter den Begriff "Transportwagen" im Sinne der hier vorliegenden Erfindung fallen auch alle bekannten klassischen Einkaufswagen, die ein Fahrgestell, zumindest einen Korb und das aus zwei Griffen 3 bestehende Griffpaar 2 aufweisen. Jeder Griff 3 ist mit einem Befestigungsabschnitt 4 zum Befestigen am Transportwagen 1 ausgestattet. Jeder Griff 3 weist auch einen Griffabschnitt 5 auf, der zum Führen des Transportwagens 1 dient. Der Befestigungsabschnitt 4 eines jeden Griffes 3 ist schräg nach unten weisend und zum Transportwagen 1 hinführend angeordnet. Der Griffabschnitt 5 eines jeden Griffes 3 wiederum weist ebenfalls schräg nach unten, ist jedoch vom Transportwagen 1 wegführend angeordnet. Diese Griffform ist auch unter der Bezeichnung "Pistolengriff" bekannt. Im Beispiel ist der Griffabschnitt 5 über einen Verbindungsabschnitt 6 mit dem Befestigungsabschnitt 4 verbunden. Die beiden Griffe 3 sind spiegelbildlich gestaltet, so dass am Transportwagen 1 ein rechter und ein linker Griff 3 das Griffpaar 2 bilden. Anhand der Zeichnung ist leicht vorstellbar, dass die Anordnung des Verbindungsabschnittes 6 bei jedem Griff 3 so gewählt ist, dass von oben oder in Schieberichtung des Transportwagens 1 betrachtet, siehe Pfeil, der Griffabschnitt 5 eines jeden Griffes 3 seitenversetzt zu dessen Befestigungsabschnitt 4 angeordnet ist. Im Beispiel ist der horizontal gemessene lichte Abstand der beiden Griffabschnitte 5 kleiner als der gleichermaßen gemessene lichte Abstand der beiden Befestigungsabschnitte 4. Die Griffe 3 können aber auch um 180° gedreht angeordnet sein, so dass der lichte Abstand der Griffabschnitte 5 größer ist als der lichte Abstand der Befestigungsabschnitte 4. Es ist wahlweise eine Griffstange 7 strichpunktiert eingezeichnet, die in je einen Griffabschnitt 5 mündet und in diesen arretiert ist. Zu diesem Zweck kann jeder Griffabschnitt 5, sofern es dienlich ist und das angestrebte enge Stapeln der Transportwagen 1 nicht behindert, mit einer Griffstangenaufnahme 8 zum Anbringen einer horizontal angeordneten Griffstange 7 ausgestattet sein.

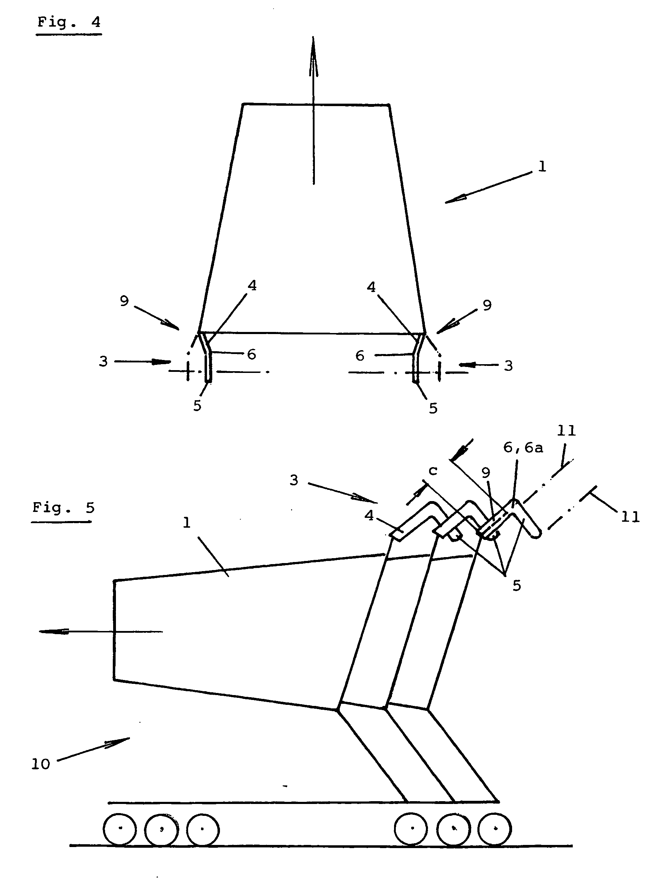

Fig. 2 zeigt einen der beiden Griffe 3 des Griffpaares 2. Bezogen auf Fig. 1 ist es der linke Griff 3. Der rechte, nicht dargestellte Griff 3 ist spiegelbildlich zum linken Griff 3 ausgebildet. Jeder Griff 3 weist einen Befestigungsabschnitt 4 auf, der im Beispiel schräg von oben nach unten und hin zum Transportwagen 1 führt. Der Befestigungsabschnitt 4 ist im Beispiel taschenförmig ausgebildet, so dass dieser sich auf eine beispielsweise als Vorsprung gestaltete Befestigungseinrichtung 9, siehe Fig. 5, an einem Transportwagen 1 aufstecken und gegen Lösen sichern lässt. Jeder Griff 3 weist auch einen Griffabschnitt 5 auf, der im Beispiel von oben schräg nach unten und weg vom Transportwagen 1 führt, um für den Benutzer des Transportwagens 1 eine ergonomisch günstige Handhaltung zu garantieren. Der Griffabschnitt 5 ist auf Höhe seines oberen Bereiches über den Verbindungsabschnitt 6 mit dem Befestigungsabschnitt 4 verbunden. Der Verbindungsabschnitt 6 kann in eingebautem Zustand eines jeden Griffes 3 horizontal oder ansteigend und/oder abfallend angeordnet sein. Seine Anordnung ist jedenfalls so gewählt, dass von oben oder in Schieberichtung des Transportwagens 1 betrachtet, der Griffabschnitt 5 seitenversetzt zum Befestigungsabschnitt 4 angeordnet ist.

Fig. 3 zeigt in Draufsicht zwei mit je einem Griffpaar 2 ausgestattete Transportwagen 1, die platzsparend ineinander geschoben, also gestapelt sind. Konische Gestalt des Fahrgestelles, konische Ausbildung der Ladeplattform und/oder des Korbes oder die Möglichkeit des Anhebens der Ladeplattform sowie geschachtelte Anordnungen weiterer Details der Transportwagen 1 ermöglichen das bekannte Ineinanderschieben der Transportwagen 1. Aus der Zeichnung ist die Wirkung der Erfindung deutlich erkennbar. Durch die versetzte Anordnung von Griffabschnitt 5 und Befestigungsabschnitt 4 eines jeden Griffes 3 befindet sich in zusammen geschobenem Zustand der Transportwagen 1 jeder Griffabschnitt 5 eines im Stapel 10 vorausbefindlichen Griffes 3 neben dem Befestigungsabschnitt 4 eines rückwärtig eingeschobenen Transportwagens 1. Im Umkehrschluss befindet sich jeder Befestigungsabschnitt 4 eines rückwärtig eingeschobenen Transportwagens 1 neben dem Griffabschnitt 5 des jeweils vorausbefindlichen Transportwagens 1. Der Befestigungsabschnitt 4 und der Griffabschnitt 5 sind demnach an jedem Griff 3 so angeordnet, dass sich in gestapeltem Zustand mehrerer Transportwagen 1 und ausgehend von dem zuletzt in den Stapel 10 eingeschobenem Transportwagen 1 in Seitenansicht betrachtet die Befestigungsabschnitte 4 der Griffe 3 eines jeweils zuletzt in den Stapel 10 eingeschobenen Transportwagens 1 mit den Griffabschnitten 5 der Griffe des im Stapel 10 jeweils nächstfolgenden Transportwagens 1 überschneiden. Die dadurch erzielte Verringerung der sogenannten Stapelabstände b zwischen den einzelnen Transportwagen 1 ist durch das Maß a, welches das Ausmaß der Überschneidung anzeigt, ersichtlich.

Bei einem weiteren in Draufsicht gezeichneten Ausführungsbeispiel gemäß Fig. 4 geht bei beiden Griffen 3 der Verbindungsabschnitt 6 vom Befestigungsabschnitt 4 fließend in den Griffabschnitt 5 über. Diese gestalterisch ansprechende Lösung ist deshalb möglich, weil der Befestigungsabschnitt 4 eines jeden Griffes 3 in Bezug zur Schieberichtung des Transportwagens 1 entweder schräg nach außen oder, wie gezeichnet, schräg nach innen verlaufend angeordnet ist. Die an den Transportwagen 1 angeordneten Befestigungseinrichtungen 9 zum Befestigen der Griffe 3 verlaufen somit ebenfalls schräg nach außen (strichpunktiert gezeichnet) oder schräg nach innen, siehe auch Fig. 5. Der Verbindungsabschnitt 6 geht vom Befestigungsabschnitt 4 in den Griffabschnitt 5 über, wobei jeder Griffabschnitt 5 im Beispiel parallel zur Schieberichtung des Transportwagens 1 verläuft, siehe Pfeil. Der Griffabschnitt 5 eines jeden Griffes 3 ist somit winklig zu dessen Befestigungsabschnitt 4 angeordnet. Alle weiteren Details lassen sich aus der Beschreibung zu Fig. 1 bis Fig. 3 auf die hier beschriebenen Griffe 3 und deren Anordnung übertragen.

Fig. 5 zeigt in Seitenansicht einen aus drei platzsparend ineinander geschobenen Transportwagen gebildeten Stapel 10, der eine Reihe bildet. Die Zeichnung zeigt die an den im Beispiel als Einkaufswagen gestalteten Transportwagen 1 links angeordneten Griffe 3. Spiegelbildlich kann man sich die rechts angeordneten Griffe 3 vorstellen. Wie im Ausführungsbeispiel gemäß Fig. 3 überschneiden sich auch hier die Befestigungsabschnitte 4 sowie die Griffabschnitte 5 der Griffe 3 und zwar so, dass die Griffabschnitte 5 immer seitlich versetzt zu den Befestigungsabschnitten 4 angeordnet sind. In der gezeigten Ansicht überschneidet der Befestigungsabschnitt 4 der Griffe 3 des einen Transportwagens 1 den Griffabschnitt 5 der Griffe 3 des anderen Transportwagens 1. Ein Teil eines jeden Griffabschnittes 4 ist somit verdeckt. Auch bei diesem Ausführungsbeispiel ist der Befestigungsabschnitt 4 und der Griffabschnitt 5 an jedem Griff 3 so angeordnet, dass sich in gestapeltem Zustand mehrerer Transportwagen 1 und ausgehend von dem zuletzt in den Stapel 10 eingeschobenen Transportwagen 1 in Seitenansicht betrachtet die Befestigungsabschnitte 4 der Griffe 3 eines jeweils zuletzt in den Stapel 10 eingeschobenen Transportwagens 1 mit den Griffabschnitten 5 der Griffe 3 des im Stapel 10 jeweils nächstfolgenden Transportwagens 1 überschneiden. Ordnet man, bezogen auf Fig. 4, die beiden Griffe 3 spiegelbildlich an, so dass die Befestigungsabschnitte 4 schräg nach außen stehen, überschneiden in Seitenansicht betrachtet die Griffabschnitte 5 in einem Stapel 10 mehrerer Transportwagen 1 die Befestigungsabschnitte 4 der jeweils benachbarten Transportwagen 1. Die Überschneidung und damit die teilweise Überdeckung erfolgt dann bezogen auf die vorab beschriebene Lösung umgekehrt. Das Merkmal "nach außen" bedeutet mit Blick auf die Zeichnungsebene nach rechts oder nach links. "Nach innen" bedeutet zur Bildmitte hin. Am rechts dargestellten Transportwagen 1 sind auch die beiden Befestigungseinrichtungen 9, die sich an jedem Transportwagen 1 befinden, gestrichelt eingezeichnet. Die Befestigungseinrichtung 9 ragt bei jedem Griff 3 ein Stück weit in den Befestigungsabschnitt 4 hinein, siehe Maß c. Durch zwei strichpunktiert gezeichnete Linien 11 wiederum ist die Größe des Griffabschnittes 5 vorgegeben, der üblicherweise von der Hand eines Benutzers faustartig umfasst wird. Es verbleibt zwischen dem so definierten Griffabschnitt 5 und dem Ende eines jeden Befestigungsabschnittes 4 ein ungenutzter Bereich 6a, der als Verbindungsabschnitt 6 dient, was auch auf das Ausführungsbeispiel gemäß Fig. 1 bis Fig. 3 zutrifft. Die Möglichkeiten zur Gestaltung des Verbindungsabschnittes 6 sind durch die eben zitierte Definition festgelegt.

Die Beschreibung hat sich in erster Linie mit Transportwagen beschäftigt, die bevorzugt in Selbstbedienungsgeschäften und Heimwerkermärkten zum Einsatz kommen. Die Erfindung schließt selbstverständlich auch alle anderen Transportwagen ein, die sich platzsparend in Reihen stapeln lassen, um für eine Benutzung zur Verfügung zu stehen. Solche Transportwagen können deshalb auch in Form von stapelbaren Rollcontainem, Kofferkulis, Kommissionierwagen oder Wagen für den Hotelbereich oder für die Benutzung in Krankenhäusern vorliegen.

## Patentansprüche

1. Von Hand bewegbarer Transportwagen (1), der in einen gleichen Transportwagen (1) platzsparend einschiebbar ist, um mit mehreren Transportwagen (1) einen Stapel (10) zu bilden, aus dem der Transportwagen (1) für die Benutzung entnommen werden kann, mit einem am Transportwagen (1) befestigten Griffpaar (2), das zum Schieben und Ziehen des Transportwagens (1) bestimmt ist, wobei jeder Griff (3) des Griffpaares (2) einen Befestigungsabschnitt (4) zum Befestigen des Griffes (3) am Transportwagen (1) sowie einen Griffabschnitt (5) zum Führen des Transportwagens (1) aufweist, wobei ferner jeder Befestigungsabschnitt (4) schräg nach unten und zum Transportwagen (1) hinführend und jeder Griffabschnitt (5), ebenfalls schräg nach unten, jedoch vom Transportwagen (1) wegführend angeordnet ist und wobei sich am Transportwagen (1) Mittel befinden, die in einem Abstand zu den Griffen (3) angeordnet sind und im Stapel (10) mehrerer Transportwagen (1) den jeweiligen Stapelabstand zwischen den Transportwagen (1) bestimmen, **dadurch gekennzeichnet, dass** der Befestigungsabschnitt (4) und der Griffabschnitt (5) eines jeden Griffes (3) so angeordnet sind, dass sich in gestapeltem Zustand mehrerer Transportwagen (1), und ausgehend von dem zuletzt in den Stapel (10) eingeschobenen Transportwagen (1), sowie in Seitenansicht betrachtet, die Befestigungsabschnitte (4) der Griffe (3) eines jeweils zuletzt in den Stapel (10) eingeschobenen Transportwagens (1) mit den Griffabschnitten (5) der Griffe (3) des im Stapel (10) jeweils nächstfolgenden Transportwagens (1) überschneiden oder umgekehrt.

2. Von Hand bewegbarer Transportwagen nach Anspruch 1, **dadurch gekennzeichnet, dass** von oben oder in Schieberichtung des Transportwagens (1) betrachtet der Griffabschnitt (5) eines jeden Griffes (3) seitenversetzt oder winklig zu dessen Befestigungsabschnitt (4) angeordnet ist.

3. Von Hand bewegbarer Transportwagen nach Anspruch 1, **dadurch gekennzeichnet, dass** der Griffabschnitt (5) eines jeden Griffes (3) durch einen Verbindungsabschnitt (6) mit dem Befestigungsabschnitt (4) verbunden ist.

4. Von Hand bewegbarer Transportwagen nach Anspruch 3, **dadurch gekennzeichnet, dass** der Verbindungsabschnitt (6) eines jeden Griffes (3) entweder horizontal oder horizontal und schräg oder schräg ansteigend und/oder schräg abfallend angeordnet ist.

5. Von Hand bewegbarer Transportwagen nach Anspruch 1, **dadurch gekennzeichnet, dass** die am Transportwagen (1) befindlichen, zum Befestigen der Griffe (3) bestimmten Befestigungseinrichtungen (9) von oben betrachtet schräg nach außen oder schräg nach innen verlaufend angeordnet sind.

6. Von Hand bewegbarer Transportwagen nach Anspruch 1, **dadurch gekennzeichnet, dass** jeder Griffabschnitt (5) eine Griffstangenaufnahme (8) zum Anbringen einer horizontal angeordneten Griffstange (7) aufweist.

## Claims

1. Manually movable transport trolley (1), which is insertable into an identical transport trolley (1) in a space-saving manner, in order to form a stack (10) with a plurality of transport trolleys, from which stack (10) the transport trolley (1) may be removed for use, having a pair of handles (2) which are fastened on the transport trolley (1) and which are conceived for pushing and pulling the transport trolley (1), wherein each handle (3) of the pair of handles (2) has a fastening portion (4) for fastening the handle (3) on the transport trolley (1) and a handle portion (5) for guiding the transport trolley (1), wherein furthermore each fastening portion (4) is disposed so as to be directed obliquely downward and toward the transport trolley (1), and each handle portion (5) is disposed so as to likewise be directed obliquely downward but away from the transport trolley (1), and wherein means are located on the transport trolley (1) which are disposed so as to be spaced apart from the handles (3) and in the stack (10) of a plurality of transport trolleys (1) determine the respective stack spacing between the transport trolleys (1), **characterized in that** the fastening portion (4) and the handle portion (5) of each handle (3) are disposed such that in the stacked state of a plurality of transport trolleys (1), and proceeding from that transport trolley (1) that has last been inserted into the stack (10), and when viewed from the side, the fastening portions (4) of the handles (3) of a respective transport trolley (1) that has last been inserted into the stack (10) overlap the handle portions (5) of the handles (3) of that transport trolley (1) that is in each case the next following transport trolley (1) in the stack (10), or vice-versa.

2. Manually movable transport trolley according to Claim 1, **characterized in that** when viewed from above or in the displacement direction of the transport trolley (1), the handle portion (5) of each handle (3) is disposed so as to be laterally offset or angular in relation to the fastening portion (4) thereof.

3. Manually movable transport trolley according to Claim 1, **characterized in that** the handle portion (5) of each handle (3) is connected by way of a connection portion (6) to the fastening portion (4).

4. Manually movable transport trolley according to Claim 3, **characterized in that** the connection portion (6) of each handle (3) is disposed so as to be horizontal, or horizontal and oblique, or obliquely ascending, and/or obliquely descending.

5. Manually movable transport trolley according to Claim 1, **characterized in that** the fastening installations (9) which are located on the transport trolley (1) and which are conceived for fastening the handles (3), when viewed from above, are disposed so as to run obliquely outward or obliquely inward.

6. Manually movable transport trolley according to Claim 1, **characterized in that** each handle portion (5) has a handle-bar receptacle (8) for attaching a horizontally disposed handle bar (7).

## Revendications

1. Chariot de transport (1) pouvant être déplacé à la main et être inséré pour gagner de la place dans un chariot de transport (1) identique, pour former avec plusieurs chariots de transport (1) une pile (10) à partir de laquelle le chariot de transport (1) peut être retiré pour utilisation, avec une paire de poignées (2) fixée au chariot de transport (1) et conçue pour pousser et tirer le chariot de transport (1), chaque poignée (3) de la paire de poignées (2) comportant une section de fixation (4) pour la fixation de la poignée (3) au chariot de transport (1) ainsi qu'une section de poignée (5) pour guider le chariot de transport (1), chaque section de fixation (4) pouvant en outre être guidée de façon oblique vers le bas et amenée vers le chariot de transport (1) et chaque section de poignée (5) étant également disposée de façon oblique vers le bas, toutefois en s'écartant du chariot de transport (1) et des moyens se trouvant au niveau du chariot de transport (1) et étant disposés à une certaine distance des poignées (3) et déterminant dans la pile (10) composée de plusieurs chariots de transport (1) la distance de pile respective entre les chariots de transport (1), **caractérisé en ce que** la section de fixation (4) et la section de poignée (5) de chaque poignée (3) sont disposées de telle sorte qu'à l'état empilé de plusieurs chariots de transport (1), et à partir du dernier chariot de transport (1) inséré dans la pile (10), ainsi qu'en vue de côté, les sections de fixation (4) des poignées (3) d'un chariot de transport (1) respectivement inséré en dernier dans la pile (10) croisent les sections de poignée (5) des poignées (3) du chariot de transport (1) respectivement suivant dans la pile (10) ou inversement.

2. Chariot de transport pouvant être déplacé à la main selon la revendication 1, **caractérisé en ce que** considérée d'en haut ou dans la direction de poussée du chariot de transport (1), la section de poignée (5) de chaque poignée (3) est disposée de façon décalée en côté ou selon un certain angle par rapport à la section de fixation (4).

3. Chariot de transport pouvant être déplacé à la main selon la revendication 1, **caractérisé en ce que** la section de poignée (5) de chaque poignée (3) est reliée à la section de fixation (4) par une section de liaison (6).

4. Chariot de transport pouvant être déplacé à la main selon la revendication 3, **caractérisé en ce que** la section de liaison (6) de chaque poignée (3) est disposée soit de façon horizontale soit de façon horizontale et de façon oblique ou de façon oblique selon une pente montante et/ou de façon oblique selon une pente descendante.

5. Chariot de transport pouvant être déplacé à la main selon la revendication 1, **caractérisé en ce que** les dispositifs de fixation (9) se trouvant au niveau du chariot de transport (1) et conçus pour la fixation des poignées (3) sont disposés de façon à s'étendre, vues d'en haut, de façon oblique vers l'extérieur ou de façon oblique vers l'intérieur.

6. Chariot de transport pouvant être déplacé à la main selon la revendication 1, **caractérisé en ce que** chaque section de poignée (5) comporte un logement de barre de poignée (8) permettant de placer une barre de poignée (7) disposée de façon horizontale.
